# EUROPEAN PATENT APPLICATION

(11) **EP 4 592 357 A2**
(43) Date of publication of application: **30.07.2025**
(21) Application number: 25461507.3
(22) Date of filing: 27.01.2025
(51) Int. Cl.: C08L 95/00, C09J 195/00

(54) **SEALANT COMPOSITION AND SEALING SYSTEM FOR JOINTS OF BUILDING ELEMENTS OF DOOR AND WINDOW JOINERY**

(30) Priority: 26.01.2024 PL 44762324
(71) Applicant: Selena Industrial Technologies Spolka Z Ograniczona Odpowiedzialnoscia, 58-200 Dzierzoniow (PL)
(72) Inventor: Podobinski, Michal, 58-200 Dzierzoniów (PL); Zawada, Damian, 87-140 Chelmza (PL); Zemanek, Piotr, 58-261 Bielawa (PL)
(74) Representative: Witek, Rafal

(57) **Abstract**

The first object of the invention is a sealant composition for joints in window and door joinery construction elements, comprising a base, a filler and additives, characterised in that it contains, with the weight contents expressed in relation to the mass of the composition, an asphalt-containing base in an amount of 10% (w/w) to 45% (w/w), plasticisers in an amount of 0.1% (w/w) to 10% (w/w), oils in an amount of 0.1% (w/w) to 10% (w/w), a prepolymer in an amount of 1% (w/w) to 35% (w/w), a filler in an amount of 0.3% (w/w) to 55% (w/w), and a cure catalyst in an amount of 0.1% (w/w) to 1.5% (w/w), as well as stabilising agents and an adhesion promoter. The invention also includes a sealing system for joints in window and door joinery construction elements.

## Description

The invention concerns a sealant composition and a sealing system for joints in window and door joinery construction elements, especially windows and exit doors.

Polyurethane foams are known to be used as window insulation. Common polyurethane foams are based on aromatic isocyanates, usually mixtures of isomers of differently substituted forms of diisocyanate TDI and mixtures of differently substituted methylene diphenyl diisocyanates MDI, while oligomers with hydroxy groups at their ends, including polyesters or polyethers, are used as polyols.

Polish patent No. 213303 describes a single-component composition for manufacturing polyurethane foam comprising a mixture of a prepolymer, a porophore, and a surfactant. As the prepolymer, it comprises free isocyanate groups in an amount representing 12-17% by weight of the prepolymer produced in a reaction of a polyisocyanate with a polyol mixture comprising a first polyol, which is a triol having a molecular mass of 600-2,500, and a second polyol, which is a diol, triol, or a mixture thereof having a molecular mass of 6,000-10,000, with a weight ratio of the first polyol to the second polyol ranging from 1:6 to 1:2. As the blowing agent, it comprises compounds selected from alkanes, ethers, ketones, alkyl carboxylates, halogenated hydrocarbons, and mixtures thereof. The product of a reaction between poly(alkyl siloxane) and polyalkylene ethylene is used as the surfactant, whereas an alkylene oxide is ethylene oxide, propylene oxide, or butylene oxide in an amount of 0.5-4% by weight with respect to the total mass of the composition.

Patent EP1 672 161 presents a sealant for connections of construction elements, which comprises an insulating material in an inner region of the connection, and a sealant in at least one front-side region of the connection edge. The insulating material consists of a one-component, moisture-cure, flexible polymer foam and a sealing material made from a water vapour diffusion-resistant sealant, immediately adjacent to the insulating material, wherein the sealant is one-component, moisture-cure sealant, and can be injected before curing. Its flexibility is substantially equal to or higher than that of the insulating material.

In accordance with DE 197 25 705, a connection between a chambranle and a frame is insulated with mounting foam. Subsequently, a waterproof finish is applied to the connections of a construction element from the outside using an unspecified flexible material, which is applied onto the mounting foam from the outside. Patent FR 2 045 283 presents a connection sealant, in which a connection to a building structure is made by means of an inner insulating layer, which is made, for example, of a synthetic cellulose material, and by means of a watertight and airtight outer layer, which encloses the inner layer on both sides.

GB 2 110 282 A presents a connection sealant, in which a connection between a swing door and a vehicle body is sealed on both outer sides by means of a permanently flexible adhesive, with an optional filler strip in the centre of the connection seal, for example made of a foam material. The 2018 "WINDOW & DOOR" product catalogue by the SELENA company discloses on page 81 a sealing system comprising an inner foam layer covered with front layers taken from a tape roll.

Patent EP 388 55 21 describes a sealing system for joints of window and door joinery construction elements, especially windows and exit doors, comprising an insulating material in the middle area of a connection in the form of polyurethane foam and in the front area of a connection in the form of a sealant, wherein said sealing system further comprises two front elements, which constitute the material that sets the system and seals the insulating material, wherein one of the front layers is the internal layer on the inside of the construction element, and the other front layer is the external layer on the outside of the construction element.

The technical problem faced by the invention is to provide a sealant that is resistant to ponding water, UV radiation, and varying weather conditions. In addition, the sealant should also be resistant to dripping water immediately after application under dedicated application conditions (suitable temperature and humidity of the air and substrates). On the other hand, once fully cured, the sealant should be characterised by increased ponding water resistance and very low water absorption capacity of the sealing mass. Surprisingly, the present invention solves the above-mentioned problems.

The first object of the invention is a sealant composition for joints in window and door joinery construction elements, comprising a base, a filler and additives, characterised in that it contains, with the weight contents expressed in relation to the mass of the composition, an asphalt-containing base in an amount of 10% (w/w) to 45% (w/w), plasticisers in an amount of 0.1% (w/w) to 10% (w/w), oils in an amount of 0.1% (w/w) to 10% (w/w), a prepolymer in an amount of 1% (w/w) to 35% (w/w), a filler in an amount of 0.3% (w/w) to 55% (w/w), and a cure catalyst in an amount of 0.1% (w/w) to 1.5% (w/w), as well as stabilising agents and an adhesion promoter.

The catalyst can be selected from a broad group used in the field of the invention. For example, it can be an organometallic catalyst, where the metal is bismuth, tin, or zirconium.

In a preferable embodiment of the invention, the base contains asphalt in an amount of no less than 50 wt%.

In a further preferable embodiment of the invention, in relation to the mass of the composition, the filler contains calcium carbonate, dolomite, or kaolin in an amount of 0.1% (w/w) to 35% (w/w), pyrogenic silica in an amount of 0.1% (w/w) to 10% (w/w), and a pigment in an amount of 0.1% (w/w) to 10% (w/w). Preferably, the pigment is selected from a group containing: an organic pigment, mineral pigment, carbon black, titanium white, and/or a mixture thereof, the pigment having the form of a powder or paste.

In another preferable embodiment of the invention, the composition contains an adhesion promoter in an amount of 0.1% (w/w) to 5% (w/w) and stabilising agents in an amount of 0.5% (w/w) to 15% (w/w). The following amines can constitute the adhesion promoter: aminosilanes, such as 3-aminopropyltrimethoxysilane (CAS 13822-56-5), and aminosiloxanes, such as poly(dimethoxysilane) (CAS 67923-07-3). Stabilising agents can be selected from silanes, aliphatic hydrocarbons, aromatic hydrocarbons, and sebacynates. Both the adhesion promoter and the stabilising agents are agent which are commonly known and used in the field of the invention.

A second object of the invention is a sealing system for joints in window and door joinery construction elements, especially windows and exit doors, comprising an insulating material in the middle area of a connection in the form of polyurethane foam and in the front area of a connection in the form of a sealant, the sealant being an outer layer on the outer side of a construction element, characterised in that the outer layer [is] formed by a cured semi-solid mass, which is applied over the polyurethane foam, wherein the outer layer is a sealant with the composition as defined in the first object of the invention, wherein at least one outer layer is applied, wherein the flexibility of the outer layer coating after curing is substantially equal to or greater than the flexibility of the insulating material, and the water absorption capacity of the outer layer is less than 5% according to the EN 13963 standard.

In a preferable embodiment of the invention, the polyurethane foam constitutes a material with high thermal and acoustic insulation parameters (thermal conductivity coefficient ≤ 0.036 W/mk, acoustic insulation min. 55 dB).

The sealant composition according to the invention provides a sealing layer resistant to ponding water, UV radiation, and varying weather conditions. Thanks to its chemical base, the material is resistant to dripping water immediately after application under dedicated application conditions (suitable temperature and humidity of the air and substrates). Once the sealant has fully cured from the outer front side, increased ponding water resistance and very low water absorption capacity of the sealing mass are possible.

### Example 1

For the preparation of an exemplary outer seal of the lower window area in the form of waterproofing, the following components were used in the following proportions, as shown in Table 1.

Example ET3 comprises a composition according to the claimed invention. Examples ET1 and ET2 are not according to the claimed invention.

The product is created in two steps. In the first step, a bitumen portion dosed by a pipeline is homogenised in a standalone stirrer with a prepolymer, CAS oil (869022-45-3), plasticisers at an elevated temperature, and solvents. The final product does not contain solvents. They are removed from the product during the second production step by means of a vacuum pump. The basic asphalt content must be no less than 50%. Plasticisers can be chosen from phthalate plasticisers, e.g. diisodecyl phthalate (CAS 26761-40-0), or phthalate-free ones, e.g. bis(2-ethylhexyl)cyclohexane-1,2-dicarboxylate (CAS 84-71-9).

After mixing, quality control checks the physicochemical properties to present an assessment of the homogeneity of the asphalt mixture.

In the second step, the premix is combined in a planetary mixer equipped with a heating and cooling system and a vacuum pump with at least 10% of a prepolymer with terminal functional groups, e.g. siloxane or silane, along with silica (CAS 112945-52-5) and other additives, including an adhesion promoter or promoters (CAS 82985-35-1). However, the prepolymer can be also chosen from a group comprising, for example, glycerol propoxylate (CAS 25791-96-2), commercially available polyesters such as ROKESTER 1600, SAX260, Geniosil XM20 or polyisobutylene (CAS 9003-27-4), or the like. According to Table 1, filler components and stabilising additives (CAS 1035336-91-5) are added to the homogeneous bitumen-silane mixture. The filler accounts for 0.3% to approx. 55% of the composition mass. Following homogenisation of the mixture, the product is mixed under vacuum to eliminate the air which may have entered at any (CAS step of the production process. After the addition of stabilising additives, it is necessary to check the degree of air entrapment. Once the fillers and stabilising agents are homogenised in the mixture, a curing reaction catalyst diluted in oil (CAS 869022-45-3) is carefully added in the end. The catalyst used can be an organometallic catalyst, where the metal is bismuth (CAS 34364-26-6), tin (CAS 27253-29-8), or zirconium (CAS 22464-99-9). In the case of aluminium pigments, it is necessary to control the degree of homogenisation in the system.

**Table 1: Examples of sealant preparations (outer front seal-layer)**

| Category of raw materials | Raw material | Example ET1 | Example ET2 | Example ET3 |
|---|---|---|---|---|
| Base | Asphalt | 45.0 | 50.0 | 18.0 |
| | Latex | 5.0 | 8.0 | - |
| | Prepolymer | - | | 10.0 |
| | Oils | | | 1.0 |
| | Plasticisers/ | - | | 1.0 |
| Filler | Chalk | 2.0 | 1.0 | 25.0 |
| | Aluminium pigment | - | | 2.0 |
| | Titanium white | - | 4.0 | - |
| | Pyrogenic silica | - | | 1.5 |
| Additives | Emulsifiers | 0.4 | 0.3 | - |
| | Rheology modifier | 0.75 | 0.85 | - |
| | Adhesion promoter | - | | 0.6 |
| | Stabilising agents | - | | 5.0 |
| | catalyst | - | | 0.1 |

### Example 2

The sealing mass according to Example 1 is used in the space between a window or exit door frame and the lower zone of a building, which may be placed underground, or have concrete poured over it, or be covered with an independent structure, e.g. a terrace.

The waterproofing layer extends the life and durability of parameters of the materials used simultaneously as sill plate and/or thermal insulation in the central area of the lower zone placed directly below the chambranle of a window or an exit door. The products included in the above system as the outer layer are compatible, and do not damage other construction materials, such as: PVC, metal, aluminium, wood, aerated concrete, calcium silicate, building ceramics, concrete, expanded clay aggregate, EPS styrofoam, XPS extruded polystyrene, PUR, PIR, Purenit, and polyurethane foam.

A sealant with the composition according to the invention can be also used for the renovation and maintenance of bituminous coverings, mainly for roofs, the formation of waterproof coatings on horizontal and vertical surfaces, the protection of construction elements against the effects of moisture, the installation of roof flashing on roofing felt, the sealing of roof details, hidden gutters, troughs, and skylight walls, as well as to combine different surfaces in order to obtain continuous waterproofing, including coated sheet metal, bituminous roofing felt, ceramics, and concrete, also on façades.

An exemplary sealing system was prepared according to the following procedures/operations, using the components listed below:
The chambranle (window/door) is seated on a special sill plate made of, e.g. PVC, EPS, XPS, PUR, or PIR, which can have thermal insulation properties. The sill plate itself is levelled using blocks and wedges on a concrete substrate in a window or door reveal. Polyurethane foam was used in the space between the sill plate and the concrete substrate, and between the chambranle and the wall, since it is a material with high thermal and acoustic insulation parameters (thermal conductivity coefficient ≤ 0.036 W/mk, acoustic insulation min. 55 dB). Generally, it can be any polyurethane foam used in the field of the invention. An example of a foam is described in European patent EP 388 55 21B1.

The following components in the following proportions were used to prepare an exemplary window insulation system in the form of a seal, as shown in Table 2. The polyurethane foam composition contains a known isocyanate component, and a polyol component containing additional elements that together form a polyol premix, as well as a blowing agent: a mixture of gases.

As an isocyanate component, the composition contains polymeric diphenylene diisocyanate MDI in an amount of 390 grams. The exact qualitative and quantitative compositions of the polyol premix and the gas mixture are shown in Table 2 in six examples of embodiments of the invention.

The foam composition is prepared as follows: 390 grams of MDI polymer-methylene diphenyl diisocyanate-are added to an aerosol can with a dispensing device. Subsequently, a polyol premix containing the components shown in the table for this particular example is added to the can in an amount of 290 grams. Both components form a polyurethane prepolymer. The can is then closed in a known manner-with a pistol valve or a hand-held application gun. Pressurised gases in the liquid phase are injected through the valve. Their quantitative and qualitative compositions are shown in the table.

**Table 2 Examples of insulation materials used in the middle area**

| Component (in grams) | | Example No. 1 | Example No. 2 | Example No. 3 | Example No. 4 | Example No. 5 | Example No. 6 |
|---|---|---|---|---|---|---|---|
| Polyol premix components | | | | | | | |
| polyether triol MW 1,000 | 32 | 32 | 32 | 32 | | 32 | 32 |
| polyether triol MW 380 | 5 | 5 | 5 | 5 | | 5 | 5 |
| polyether triol MW 700 | 5 | 5 | 5 | 5 | | 5 | 5 |
| polyether diol MW 2,000 | 8 | 8 | 8 | 8 | | 8 | 8 |
| Tris(2-chloroethyl) phosphate | 15.5 | 15.5 | 15.5 | 15.5 | | 15.5 | 15.5 |
| Chlorinated paraffin, e.g. type 45 | 17.7 | 15.2 | 13.2 | 17.7 | | 17.5 | 17 |
| 1,3-butanediol | 0.5 | 3 | 5 | 0.5 | | 0.5 | 0.5 |
| Silicone surfactant | 8 | 8 | 8 | 8 | | 8 | 8 |
| 2,2'dimorpholinyldiethyl ether | 4 | 4 | 4 | 4 | | 4 | 4 |
| Catalytic retarder-polymeric acid, e.g. BA 100 | 0.3 | 0.3 | 0.3 | 0.1 | | 0.5 | 1 |
| Propylene carbonate | 4 | 4 | 4 | 4 | | 4 | 4 |
| Total polyol premix in grams and as % of premix | 290-100% | 290-100% | 290-100% | 290-100% | | 290-100% | 290-100% |

| Gaseous component. | | | | | | | |
|---|---|---|---|---|---|---|---|
| 30/70 mixture | | 102 | 102 | 102 | 102 | 102 | 102 |
| propane/isobutane | | | | | | | |
| Gas R152a grams | | 30 | 30 | 30 | 30 | 0 | 0 |
| Dimethyl ether DME | | 44 | 44 | 44 | 44 | 74 | 74 |

| Isocyanate component. | | | | | | | |
|---|---|---|---|---|---|---|---|
| MDI | | 390 | 390 | 390 | 390 | 390 | 390 |
| Total composition in grams | | 856 | 856 | 856 | 856 | 856 | 856 |

Once the foam is fully cured, it is cut off and a waterproofing seal is applied onto it and on the remaining space of the window sill plate from the outside.

The semi-fluid mass is applied evenly with a metal spatula, a metal or plastic trowel, a special flexible spatula, or a hard bristle brush. In vertical slots, application should begin from the bottom of the window, with the applicator moving upwards. The thickness of the coating immediately after application, while still wet, should be at least 2-3 mm. When the first layer is too thin, several layers can be applied if necessary, depending on the porosity of the substrate and the conditions (provided that the recommended thickness is maintained), once the previous layers have cured. In the case of a foil-wrapped product, a special dispenser for foil-wrapped products should be used to apply the coating. Remove the masking tape and clean the tools with cleaning benzine or a bitumen cleaner immediately after application.

### Performance tests of the invention-the system

The expected results of the invention, i.e. the correct, durable, and efficient work of the connection between the chambranle and the sill plate, and between the reveal and the concrete substrate on the outer side, were monitored as follows: according to the standards shown in Tab. 3B

The following results were obtained, as shown in Table 2B

These results demonstrate that 1-layer waterproofing of a system of compatible sill plate and insulation materials with the parameters set out below provides adequate protection for an entire connection, which contributes to controlled thermal efficiency. This increases the thermal and acoustic efficiency of the connections, and ultimately reduces the carbon footprint of the whole building.

These features are shown in Tables 3A and 3B. The results demonstrate that the system meets the conditions for waterproofing in buildings (including energy efficient ones, aiming for passive houses).

**Table 3A. Key parameters of the outer front sealant preparations presented in the examples.**

| Outer sealant | Elongation at break [%] (ISO 37) | Skin formation time [min.] | Cure rate/24 h [mm] |
|---|---|---|---|
| ET 1 | 250 | 60-120 | 2.0 |
| ET 2 | 200 | 60-120 | 2.0 |
| ET 3 | 350 | 50-80 | 1.8 |

This sealant combines the ease of use with the beneficial properties of the completed connection, such as:

**Table 3B.**

| Property | Parameter | Standard |
|---|---|---|
| Ponding water resistance | > 2 m water column | ISO 811 |
| UV resistance | > 500 hours | ISO 11431 |
| Resistance of coating to 3% sodium chloride solution | positive | PN-B_24004 |
| Water absorption capacity | < 5% (wood, concrete) | EN 13963 |
| Full curing time | 1.8 mm/24h | ASTM D 1640 |
| Coating permeability with a 1,000 mm water column over a period of 48 h | positive | PN-B-24000 |

The invention constitutes a compatible 1-layer system for waterproofing and sealing the connections between a chambranle, frame, and foundation. It provides very high water tightness and extends the properties of the materials used as sill plates and thermal insulation.

## Claims

1. A sealant composition for joints in window and door joinery construction elements, comprising a base, a filler, and additives, **characterised in that** it contains, with the weight contents expressed in relation to the mass of the composition, an asphalt-containing base in an amount of 10% (w/w) to 45% (w/w), plasticisers in an amount of 0.1% (w/w) to 10% (w/w), oils in an amount of 0.1% (w/w) to 10% (w/w), a prepolymer in an amount of 1% (w/w) to 35% (w/w), a filler in an amount of 0.3% (w/w) to 55% (w/w), and a catalyst in an amount of 0.1% (w/w) to 1.5% (w/w), as well as stabilising agents and an adhesion promoter.

2. The composition according to claim 1, **characterised in that** the base contains asphalt in an amount of no less than 50 wt%.

3. The composition according to claim 1, **characterised in that**, in relation to the mass of the composition, the filler contains calcium carbonate, dolomite, or kaolin in an amount of 0.1% (w/w) to 35% (w/w), pyrogenic silica in an amount of 0.1% (w/w) to 10% (w/w), and a pigment in an amount of 0.1% (w/w) to 10% (w/w).

4. The composition according to claim 3, **characterised in that** the pigment is selected from a group containing: an organic pigment, mineral pigment, carbon black, titanium white, and/or a mixture thereof, the pigment having the form of a powder or paste.

5. The composition according to claim 1, **characterised in that** it contains an adhesion promoter in an amount of 0.1% (w/w) to 5% (w/w) and stabilising agents in an amount of 0.5% (w/w) to 15% (w/w).

6. A sealing system for joints in window and door joinery construction elements, especially windows and exit doors, comprising an insulating material in the middle area of a connection in the form of polyurethane foam and in the front area of a connection in the form of a sealant, the sealant being an outer layer on the outer side of a construction element, **characterised in that** the outer layer [is] formed by a cured semi-solid mass, which is applied over the polyurethane foam, wherein the outer layer is a sealant with the composition as defined in claim 1, wherein at least one outer layer is applied, wherein the flexibility of the outer layer coating after curing is substantially equal to or greater than the flexibility of the insulating material, and the water absorption capacity of the outer layer is less than 5% according to the EN 13963 standard.

7. The system according to claim 6, **characterised in that** the polyurethane foam constitutes a material with high thermal and acoustic insulation parameters (thermal conductivity coefficient ≤ 0.036 W/mk, acoustic insulation min. 55 dB).
